# FASCICULE DE BREVET EUROPEEN

(11) **EP 3 856 524 B1**
(45) Date de publication et mention de la délivrance du brevet: **01.11.2023**
(21) Numéro de dépôt: 19795040.5
(22) Date de dépôt: 25.09.2019
(51) Int. Cl.: B41J 2/175, B41J 29/02, B41J 25/34

(54) **MODULE D'IMPRESSION PAR JET D'ENCRE POUR ROBOT D'IMPRESSION, MAGASIN POUR CES MODULES POUR CES MODULES, ET PROCÉDÉ D'IMPRESSION PAR JET D'ENCRE UTILISANT CE ROBOT**
TINTENSTRAHLDRUCKMODUL FÜR EINEN DRUCKROBOTER, MAGAZIN FÜR DIESE MODULE UND TINTENSTRAHLDRUCKVERFAHREN UNTER VERWENDUNG DIESES ROBOTERS
INK-JET PRINTING MODULE FOR PRINTING ROBOT, MAGAZINE FOR THESE MODULES, AND INK-JET PRINTING METHOD USING THIS ROBOT

(30) Priorité: 28.09.2018 FR 1801014
(43) Date de publication de la demande: 04.08.2021
(73) Titulaire: Westlake Compounds Holding, 51100 Reims (FR)
(72) Inventeur: ELAARAG, Hossam, 51100 REIMS (FR); ALIAGA, Christophe, 65290 JUILLAN (FR); EL FOUZARI, Mustapha, 51100 REIMS (FR); AMOUROUX, Nicolas, 51100 REIMS (FR)
(74) Mandataire: Schmidt, Martin Peter
(86) Numéro de dépôt international: PCT/FR2019/052247
(87) Numéro de publication internationale: WO 2020/065208

(56) Documents cités:
- EP-A1- 0 783 972
- WO-A1-99/47356
- WO-A1-03/006247
- WO-A1-2009/047510
- WO-A1-2009/088864
- WO-A1-2017/190897
- WO-A1-2018/060823

## Description

### Domaine technique de l'invention

La présente invention concerne le domaine des techniques d'impression par jet d'encre pour déposer des encres ou vernis sur une surface de pièces industrielles, notamment sur des surfaces qui ne sont pas planes. Cette impression répond typiquement à une finalité de décoration, de protection ou de fonctionnalisation de pièces industrielles. Plus particulièrement l'invention concerne un dispositif et un procédé pour l'impression par jet d'encre sur une surface de pièces industrielles de taille décimétrique ou métrique, à l'aide d'un robot multi-axes.

### Etat de la technique

La décoration sophistiquée de surfaces visibles devient de plus en plus importante dans de nombreux domaines. Tel est notamment le cas du secteur automobile. De nos jours, les consommateurs peuvent configurer leur voiture de plus en plus individuellement, en choisissant parmi un ensemble de plus en plus important d'options techniques et esthétiques. Cela concerne notamment la décoration des surfaces visibles à l'intérieur de l'habitacle.

Pour répondre à cette tendance de personnalisation, on a développé des encres vinyliques spéciales et des imprimantes numériques robotisées capables d'imprimer sur des surfaces courbes, des moules ou des pièces, notamment pour la décoration de tableaux de bord, de panneaux de portes et autres pièces en PVC moulé, destinées notamment à l'habitacle d'automobiles. Cette technologie d'impression placée permet d'imprimer, avec précision et en couleur, sur tout type de support afin de le personnaliser. On connaît déjà des blocs fonctionnels mobiles, équipés avec une tête d'impression par jet d'encre. Ces blocs peuvent être montés sur un bras de robot, selon l'enseignement notamment des documents DE 10 2017 202 195 (Heidelberger Druck-maschinen), EP 3 290 166 (Boeing) et EP 2 887 011 (Hexagon Technology Center). Dans ces agencements, les têtes d'impression à jet d'encre sont directement alimentées par un tuyau souple. De manière similaire, EP 2 644 392 (Heidelberger Druckmaschinen) décrit un bloc de tête d'impression par jet d'encre capable d'imprimer sur une surface galbée, qui est alimenté par une liaison de données et un tuyau d'alimentation d'encre.

WO 03/006247 A1 montre un module d'impression par jet d'encre comprenant une tête d'impression, un réservoir d'encre apte à alimenter en encre ladite tête d'impression, des moyens d'alimentation en gaz comprimé et une interface électronique.

Ces solutions connues présentes cependant certains inconvénients.

En effet, elles nécessitent de faire appel à de nombreux organes d'alimentation, reliant le robot et la tête d'impression. Ces organes d'alimentation, qui sont notamment des tuyaux d'alimentation fluidique et des câbles d'alimentation électrique, sont de nature à entraver les mouvements du robot. Par ailleurs, la transmission de données à la tête d'impression peut nécessiter une ligne de données. En tous les cas la présence de ces organes d'alimentation et de liaison électronique implique un temps de montage et de maintenance supplémentaire en cas de changement de la tête d'impression. WO 2013/158 310 (Kateeva Inc.) décrit une unité comprenant plusieurs têtes d'impression à jet d'encre montée sur un portique qui déplace les têtes selon deux directions principales orthogonales au-dessus d'une table plane. Ce système peut convenir pour une impression sur une surface plane, mais est très complexe.

Compte tenu de ce qui précède, la présente invention vise à remédier à au moins certains inconvénients de l'art antérieur évoqués ci-dessus. En particulier, il vise à proposer un système d'impression par jet d'encre qui peut aisément être manipulé par un bras de robot à plusieurs axes, qui permet l'impression précise sur des surfaces galbées de pièces industrielle d'une dimension pouvant dépasser un mètre, et qui permet la décoration avec plusieurs encres.

### Objets de l'invention

Selon l'invention, au moins un des objectifs ci-dessus est réalisé par un module d'impression par jet d'encre, apte à être appréhendé par le bras d'un robot par l'intermédiaire d'une interface mécanique à couplage rapide,, caractérisé en ce qu'il comprend :
- une tête d'impression,
- un réservoir d'encre, apte à alimenter en encre ladite tête d'impression,
- des moyens d'alimentation en gaz comprimé, aptes à alimenter en gaz comprimé ladite tête d'impression,
- une interface mécanique apte à coopérer de manière amovible avec une interface mécanique complémentaire d'un bras de robot,
- une interface électronique apte à coopérer de manière amovible avec une interface électronique dudit bras de robot, pour transférer des données entre ledit module et le robot,
- au moins une interface fluidique, mise en communication fluidique avec le réservoir d'encre et/ou avec les moyens d'alimentation en gaz comprimé.

Ce module représente un premier objet de l'invention.

Lesdits moyens d'alimentations en gaz comprimé peuvent comprendre, ou peuvent être, un réservoir de gaz comprimé interne, intégré audit module d'impression, ou ils peuvent être représenté par les conduites de liaison entre la tête d'impression et l'interface fluidique, cette dernière étant reliée, lorsque le module d'impression est en configuration d'impression, à une alimentation en gaz comprimé externe.

Le module d'impression selon l'invention peut comprendre des lignes de commande, s'étendant entre l'interface électronique et respectivement la tête d'impression et le réservoir d'encre. Une autre ligne de commande, optionnelle, peut s'étendre entre l'interface fluidique et les moyens d'alimentation en gaz comprimé.

Le module d'impression selon l'invention peut comprendre une ou deux conduites de liaison, s'étendant entre l'interface fluidique et/ou respectivement le réservoir d'encre et les moyens d'alimentation en gaz comprimé.

La présence d'une interface mécanique sur ledit module facilite sa connexion rapide avec l'interface mécanique complémentaire du robot, qui est apte à coopérer avec l'interface mécanique du module. La présence d'un réservoir d'encre rend le module d'impression par jet d'encre autonome pendant une certaine durée.

L'invention a également pour objet un robot pour impression de jet d'encre, comprenant un bras de robot, caractérisé en ce que ledit bras de robot comprend :
- une interface mécanique complémentaire à couplage rapide apte à coopérer avec l'interface mécanique à couplage rapide d'un module à impression par jet d'encre selon l'invention,
- une interface électronique complémentaire apte à coopérer avec l'interface électronique d'un module à impression par jet d'encre selon l'invention.

Le robot conforme à l'invention peut notamment être un robot à cinq ou six axes. Il peut comprendre une unité centrale, ainsi qu'au moins une ligne de commande reliant cette unité centrale et l'interface électronique complémentaire.

L'invention a également pour objet un magasin pour modules à impression de jet d'encre, apte à accueillir une pluralité de modules à impression de jet d'encre selon l'invention, ledit magasin comprenant
- une pluralité de stations d'accueil pour un module d'impression à jet d'encre, chaque station d'accueil comprenant au moins une interface fluidique complémentaire apte à coopérer avec l'interface fluidique d'un module à impression par jet d'encre selon l'invention, pour transférer de l'encre entre la tête et la station d'accueil et/ou pour alimenter la tête en gaz comprimé, ainsi que
- au moins une interface mécanique complémentaire apte à coopérer avec l'interface mécanique d'un module à impression par jet d'encre selon l'invention.

Ce magasin peut comprendre au moins une alimentation en gaz comprimé, qui peut être une cuve à gaz comprimé. Il peut comprendre au moins une cuve à encre.

Ce magasin permet le rechargement des modules à impression par jet d'encre en encre et air comprimé. Il facilite l'utilisation de plusieurs modules, qui se distinguent par la nature ou par la couleur de l'encre, pour décorer une même pièce ou un même groupe de pièces.

Le magasin peut comprendre tout ou partie des caractéristiques suivantes, dans la mesure où elles sont techniquement compatibles :
- Chaque station d'accueil est équipée d'une cuve à encre respective ;
- Lesdites cuves à encre sont remplies au moyen d'encres ou vernis de types différents ;
- Chaque station comprend en outre au moins une interface électronique complémentaire apte à coopérer avec l'interface électronique d'un module à impression par jet d'encre selon l'invention ;
- Chaque station comprend une alimentation en gaz comprimé, qui peut notamment être un réservoir à gaz comprimé ou un tuyau relié à une alimentation en gaz comprimé externe ;
- Chaque station comprend un bâti contenant ladite au moins une cuve à encre et/ou ladite au moins une cuve à gaz comprimé ;
- Le magasin comprend un ensemble mobile équipé de ladite interface mécanique complémentaire, et le cas échéant, de ladite interface fluidique complémentaire et/ou de ladite interface électronique complémentaire ;
- Ledit ensemble mobile comprend un chariot apte à être déplacé par rapport au bâti selon une première direction, notamment horizontale, ainsi qu'un bloc de connexion apte à être déplacé par rapport au chariot selon une seconde direction, notamment verticale, ledit bloc de connexion étant équipé de ladite interface mécanique complémentaire, et, le cas échéant, de ladite interface fluidique complémentaire et/ou de ladite interface électronique complémentaire ;
- Chaque station comprend en outre une bride d'immobilisation, s'étendant à partir du bâti (310), ladite bride et le bâti définissant un volume de réception d'un module, ladite bride et/ou le bâti étant munis de moyens d'immobilisation dudit module.

L'invention a également pour objet un ensemble d'impression par jet d'encre, comprenant un robot selon l'un quelconque des modes de réalisation de l'invention, un magasin selon l'un quelconque des modes de réalisation de l'invention, ainsi qu'au moins un module selon l'un quelconque des modes de réalisation de l'invention. Avantageusement, l'interface mécanique et l'interface mécanique complémentaire définissent un couplage rapide amovible, en particulier de type quart de tour.

L'invention a enfin pour objet un procédé d'impression à jet d'encre, comprenant les étapes suivantes :
(i) appréhension d'un module d'impression par jet d'encre se trouvant dans une station d'accueil d'un magasin pouvant contenir plusieurs desdits modules, ladite appréhension se faisant par coopération entre ladite interface mécanique complémentaire du robot et ladite interface mécanique dudit module,
(ii) connexion de l'interface électronique complémentaire dudit robot avec l'interface électronique dudit module,
(iii) déplacement du bras de robot vers une surface à imprimer,
(iv) impression d'encre sur ladite surface en déplaçant le bras de robot, en une ou plusieurs passes, ledit module étant commandé par des données qui lui sont envoyées à travers ladite interface électronique et ladite interface électronique complémentaire,
(v) à la fin de cette séquence d'impression, déplacement du bras de robot vers une station d'accueil,
(vi) dépose de la tête d'impression dans ladite station d'accueil, en déconnectant lesdites interfaces électronique et mécanique.

Ledit procédé peut comprendre les étapes supplémentaires suivantes :
(vii) déplacement du bras de robot vers une autre station d'accueil,
(viii) exécution des étapes (i) à (vi) avec une autre tête à impression de jet d'encre se trouvant dans cette station d'accueil.

Ledit magasin peut être un magasin selon l'invention. Ledit robot peut être un robot selon l'invention.

Le terme « encre » englobe ici les vernis, par exemple les vernis transparents, les vernis semi-transparents, les vernis de couleur, les vernis de protection (anti-rayure, anti-abrasion, anti-UV et autres).

Le procédé conforme à l'invention peut comprendre au moins une des caractéristiques technique suivantes, dans la mesure où elles sont techniquement compatibles avec les autres étapes :
- on procède au rechargement dudit réservoir d'encre du module au moyen d'encre, par connexion de l'interface fluidique dudit module et de l'interface fluidique complémentaire de ladite station ;
- on réalise l'étape (iv) d'impression d'encre au moyen d'un premier module, pendant qu'on réalise le rechargement d'au moins un autre module :
- on réalise le rechargement de différents modules au moyen d'encres ou de vernis de types différents.

Un dernier objet de l'invention est l'utilisation du procédé selon l'invention pour imprimer sur des surfaces galbées selon au moins une direction principale. Ladite surface galbée peut être une surface visible d'une pièce d'habillage d'un habitacle d'automobile.

### Description des figures

D'autres avantages de l'invention apparaîtront à la lecture de la description de deux modes de réalisation de l'invention, donnée ci-dessous à titre purement indicatif et non limitatif, en référence aux dessins annexés dans lesquels :
La figure 1 comporte deux vues schématiques, illustrant un module d'impression à jet d'encre conforme à l'invention, appartenant à un ensemble d'impression à jet d'encre. La figure 1(b) montre une variante de la figure 1(a) qui ne se distingue que par l'absence du réservoir de gaz comprimé.
La figure 2 est une vue schématique, illustrant plus particulièrement un robot, appartenant également à l'ensemble d'impression de la figure 1, lequel robot est apte à coopérer avec le module de la figure 1.
La figure 3 est une vue en perspective, illustrant une station apte à coopérer avec le module de la figure 1, cette station appartenant à un magasin apte à coopérer avec plusieurs modules analogues.
Les figures 4 à 7 sont des vues schématiques, illustrant différentes étapes de la mise en oeuvre de l'ensemble d'impression illustré sur les figures précédentes.
La figure 8 est une vue schématique, illustrant de façon plus précise la coopération entre les interfaces respectivement fluidique, mécanique et électronique appartenant au module et à la station de la figure 3.
La figure 9 est une vue de dessus, illustrant plus particulièrement les différentes interfaces du module de la figure 3.
La figure 10 est une vue de côté, illustrant plus particulièrement les différentes interfaces de la station de la figure 3.
La figure 11 est une vue schématique d'un ensemble d'impression à jet d'encre, comprenant le module à jet d'encre monté sur un robot à cinq axes selon l'invention.
La figure 12(a) est une photographie, montrant une pièce d'habillage pour habitacle d'automobile décorée grâce à un procédé d'impression conforme à l'invention. La figure 12(b) montre un agrandissement d'une zone indiquée sur la figure 12(a).

Les repères numériques suivants sont utilisés sur les figures :

| | | | |
|---|---|---|---|
| 1 | Module d'impression | 2 | Tête d'impression |
| 3 | Réservoir d'encre | 4 | Réservoir de gaz comprimé |
| 5 | Interface fluidique | 6 | Interface électronique |
| 7 | Interface mécanique | 31 | Canal pour l'encre |
| 41 | Canal pour le gaz comprimé | 51 | Canal pour l'encre |
| 52 | Canal pour le gaz comprimé | 60 | Ligne de commande |
| 61 | Ligne de commande | 62 | Ligne de commande |
| 101 | Robot | 106 | Interface électronique complémentaire |
| 107 | Interface mécanique complémentaire | 108 | Interface fluidique complémentaire |
| 110 | Corps du robot 101 | 111 | Bras de préhension |
| 160 | Ligne de commande | 140 | Tube de gaz comprimé |
| 161 | Unité centrale | 201 | Magasin |
| 301 | Station | 303 | Cuve d'encre |
| 304 | Cuve de gaz comprimé | 305 | Interface fluidique |
| 306 | Interface électronique | 307 | Interface mécanique |
| 308 | Cuve de purge | 309 | Plate-forme (bride) |
| 310 | Bâti | 320 | Ensemble de connexion mobile |
| 321 | Chariot | 322 | Rail |
| 324 | Colonne | 326 | Bloc de connexion |
| 328 | Vérin | 331 | Canal |
| 341 | Canal | 360 | Ligne de commande |
| 361 | Unité centrale de 301 | 370 | Rebord supérieur de 309 |
| 371 | Rebord inférieur de 309 | 372 | Pion |
| 381 | Canal | 400 | Pièce à décorer |
| 401 | Ligne de décor | 402 | Elément de décor en relief |

### Description détaillée

Le terme « encre » est pris ici dans son acception la plus large, notamment en relation avec la technique d'impression à jet d'encre, qui est connue de l'homme du métier, et inclut également les vernis de toutes sorte, qui peuvent être colorés ou non, transparents ou opaques, et inclut également les vernis de protection.

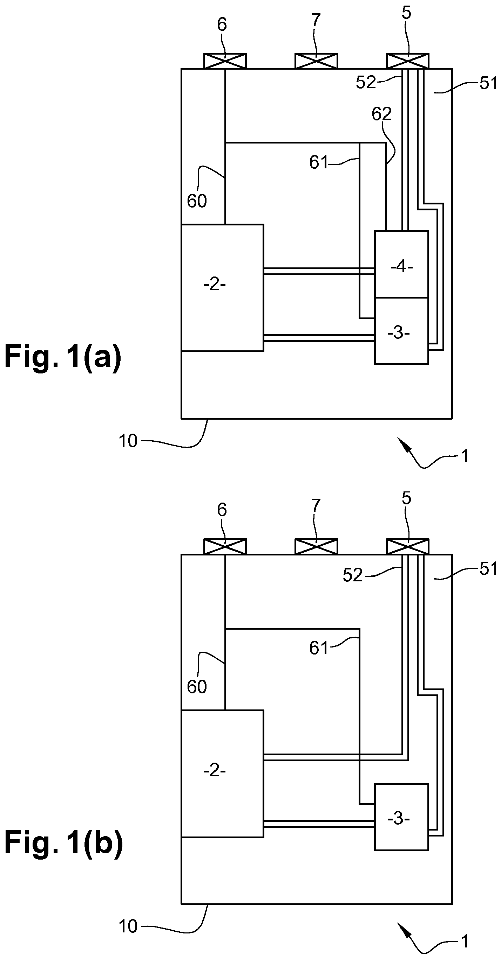

Comme cela est illustré sur les figures 1 à 4, l'ensemble d'impression à jet d'encre conforme à l'invention comporte essentiellement :
- au moins un module d'impression. Dans l'exemple illustré, il est prévu six modules d'impression référencés **1A** à **1F,** étant entendu qu'un nombre différent de ces modules d'impression peut être prévu.
- Un robot désigné dans son ensemble par la référence **101.**
- Un magasin désigné dans son ensemble par la référence **201,** destiné notamment à l'immobilisation des modules précités, ainsi qu'à leur vidage et leur recharge en fluides.

On va tout d'abord décrire la structure de l'un **1A** des modules d'impression, étant entendu que les autres modules présentent une structure identique. En référence à la figure 1(a), ce module comprend un boîtier **10,** réalisé en tout matériau approprié, par exemple en acier ou plastique. Ce boîtier, qui est par exemple de forme parallélépipédique, renferme les différents éléments fonctionnels du module.

On retrouve tout d'abord une tête d'impression, désignée dans son ensemble par la référence **2.** Cette tête d'impression, qui est de type connu en soi, est notamment équipée de buses de projection, non représentées sur les figures, qui sont destinées à projeter l'encre sur la surface de travail. Conformément à l'invention, la tête **2** est tout d'abord mise en communication avec un réservoir d'encre **3,** par l'intermédiaire d'un canal **31.** Elle est également mise en communication avec une alimentation en gaz comprimé, par l'intermédiaire d'un canal respectif **41.** Ladite alimentation en gaz comprimé peut être un réservoir d'air comprimé **4,** comme sur la figure 1(a). Ces deux réservoirs **3** et **4** sont par ailleurs mis en communication avec une interface fluidique **5,** dont la fonction sera décrite plus en détail dans ce qui suit. On note **51** et **52** les canaux respectifs, assurant la liaison par le fluide entre cette interface et ces réservoirs.

Alternativement, le réservoir de gaz comprimé est absent, comme cela est montré sur la figure 1(b), et l'interface fluidique **5** doit être alimentée par une alimentation de gaz comprimé externe, comme cela sera expliqué ci-dessous. Dans ce cas, le conduit **52** communique directement avec la tête d'impression **2,** éventuellement par l'intermédiaire d'un organe de commande (non montré sur la figure).

Le module d'impression conforme à l'invention est en outre équipé d'une interface électronique **6,** dont la fonction sera décrite plus en détail dans ce qui suit. Des lignes de commande **60, 61** et **62** assurent la liaison entre cette interface **60** et respectivement la tête d'impression **2,** ainsi que les réservoirs **3** et **4.** Enfin, ce module est équipé d'une interface mécanique **7,** dont la fonction apparaîtra plus en détail dans ce qui suit.

Dans une variante non illustrée sur les figures, le réservoir d'encre **3** est amovible et peut être remplacé quand il est vide ; dans ce cas les moyens en alimentation d'encre du réservoir d'encre peuvent être absent, à savoir le canal **51** qui assure la liaison entre le réservoir d'encre et l'interface fluidique **5.** Dans encore une autre variante, non illustrée sur les figures, le réservoir d'encre et la tête d'impression forment une seule pièce qui est amovible et qui peut être remplacée lorsque le réservoir d'encre est vide ; comme dans la variante précédente, les moyens en alimentation d'encre du réservoir peuvent alors être absents.

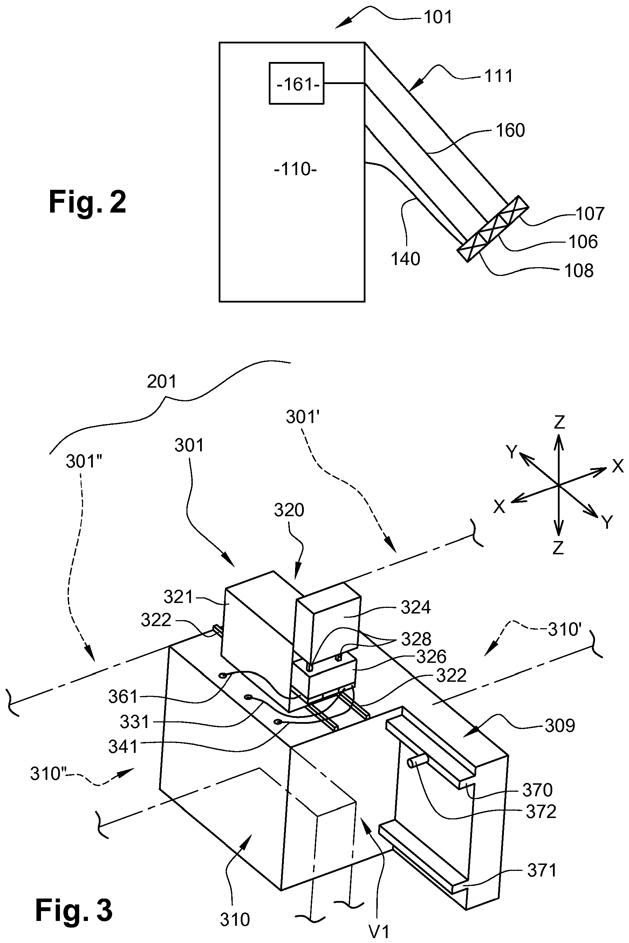

On va maintenant décrire plus en détail, en référence à la figure 2, la structure du robot **101.** Ce dernier comprend un corps **110** formant embase, de tout type approprié, ainsi qu'un bras de préhension **111.** Le corps **110** comporte le cas échéant au moins un bras supplémentaire, de manière à permettre le mouvement du bras de préhension selon plusieurs directions de l'espace. De manière typique, le robot **101** est du type à six axes ; ces robots sont connus en tant que tels.

Le bras **111** est muni, au voisinage de son extrémité libre, d'une interface mécanique dite complémentaire **107.** Cette dernière est apte à coopérer avec l'interface mécanique 7, équipant le module **1.** Ces deux interfaces mécaniques, qui sont de type connu en soi, permettent notamment une fixation amovible entre le module et le robot. À titre d'exemples non limitatifs, ces deux interfaces définissent notamment un couplage rapide, typiquement par quart de tour. Ces interfaces mécaniques, ou raccords mécaniques, à couplage rapide, sont connus de l'homme du métier et sont décrits par exemple dans la norme ISO 11593. Dans le cadre de la présente invention, la présence d'une telle interface est essentielle, mais sa structure importe peu. On peut utiliser par exemple un système de changement d'outils pour robots de la gamme MPS commercialisé par la société Stäubli.

Le bras **111** est également muni, au voisinage de son extrémité libre, d'une interface fluidique complémentaire **108,** apte à coopérer avec l'interface fluidique **5** du module **1.** Ladite interface fluidique complémentaire **108** est reliée à une alimentation de gaz comprimé externe, qui est typiquement un tube souple **140** qui accompagne le bras **111** du robot **101.** Cette interface fluidique complémentaire **108** n'est nécessaire que dans le cas où le module **1** ne possède pas de réservoir de gaz comprimé et a besoin d'une alimentation en gaz comprimé externe. Ces interfaces fluidiques, ou raccords fluidiques, à couplage rapide, sont connus de l'homme du métier ; leur structure importe peu.

Le robot est également équipé d'une unité centrale, illustrée de manière schématique et désignée dans son ensemble par la référence **161.** Cette unité centrale est reliée, par l'intermédiaire d'une ligne de commande **160,** avec une interface électronique dite complémentaire **106,** apte à coopérer avec l'interface électronique **6** du module **1.** Ces deux interfaces (ou raccords) électroniques, de type connu en soi, permettent le transfert des données depuis l'unité **161,** en direction de la tête d'impression **2** ; ces données peuvent être représentées par des signaux analogiques et/ou digitaux.

On voit donc aisément que l'interface mécanique **7** du module **1** est un raccord, de préférence un raccord à couplage rapide, conçu de manière à pouvoir coopérer avec l'interface mécanique complémentaire **107** du bras **111** du robot **101,** et que l'interface fluidique **5** du module **1** est un raccord, de préférence un raccord à couplage rapide, conçu de manière à pouvoir coopérer avec l'interface fluidique complémentaire **108** du bras **111** du robot **101.** De même, l'interface électronique **6** du module **1** est un raccord conçu de manière à pouvoir coopérer avec l'interface électronique complémentaire **106** du bras **111** du robot **101.** Lorsque les deux interfaces fluidiques **5, 108** sont couplées, elles assurent le passage de fluide. En revanche, lorsque ces deux interfaces sont déconnectées, chacune d'elle assure une étanchéité pour un fluide respectif vis-à-vis de l'air ambiant.

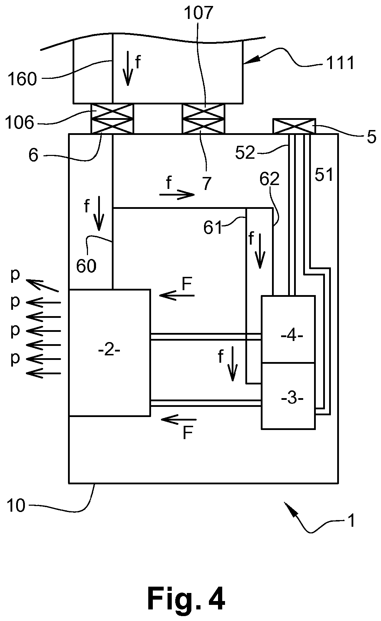

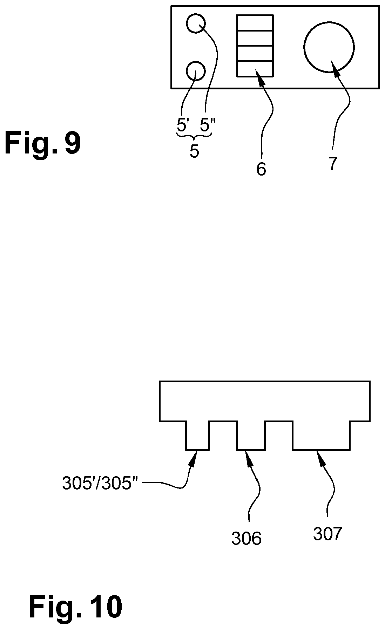

La figure 4 montre de manière schématique ce couplage entre les deux interfaces électriques **106** et **6,** d'une part, et entre les deux interfaces mécaniques **107** et **7** d'autre part ; dans cet exemple le module **1** dispose de son réservoir à gaz comprimé **4,** et son interface fluidique **5** n'a pas besoin d'être connecté à une interface complémetaire du bras **111** du robot. Un exemple pour la structure de ces différentes interfaces sera donné ci-dessous en relation avec la figure 9.

On va maintenant décrire plus en détail, en référence à la figure 3, la structure du magasin **201.** Comme cela est montre sur cette figure 3, ce magasin comporte un certain nombre de stations **301,** destinées à coopérer avec les modules **1** décrits ci-dessus. De manière préférée, on retrouve autant de stations **301** que de modules **1** à savoir que, en d'autres termes, chaque station est dédiée à un module respectif. Cependant, à titre de variante, on peut prévoir un nombre différent de stations et de modules. Dans cette optique, un module donné peut coopérer avec plusieurs stations et/ou une station donnée peut coopérer avec plusieurs modules. Sur cette figure 3, une unique station **301** est illustrée en détail, alors que les stations **301'** et **301",** situées immédiatement de part et d'autre de la station **301,** sont seulement représentés de manière très schématique en traits mixtes.

On va maintenant décrire la structure de l'une des stations, étant entendu que les autres stations présentent typiquement une structure identique. En référence à la figure 3, cette station **301** comprend tout d'abord un bâti **310,** de forme sensiblement parallélépipédique, lequel renferme différents éléments fonctionnels qui vont être décrits ci-après. Une plate-forme ou bride **309,** destinée à l'immobilisation d'un module respectif, fait saillie vers l'avant depuis un des côtés latéraux du bâti précité. Comme le montre la figure 3, les parois adjacentes du bâti et de la bride définissent un volume noté V1, destiné à la réception d'un module respectif **1.**

Cette bride est équipée de moyens mécaniques, permettant le maintien en position du module, lorsque celui-ci est immobilisé. De façon plus précise, cette bride **309** est munie par exemple de rebords respectivement supérieur **370** et inférieur **371,** destinés au centrage du module lors de son arrivée dans son volume de réception V1. Par ailleurs, le rebord supérieur **370** est pourvu d'un pion **372,** permettant l'immobilisation du module par rapport à la bride. À cet effet, ce module est par exemple pourvu d'un orifice non représenté, destinée à coopérer avec le pion précité, par exemple par encliquetage élastique.

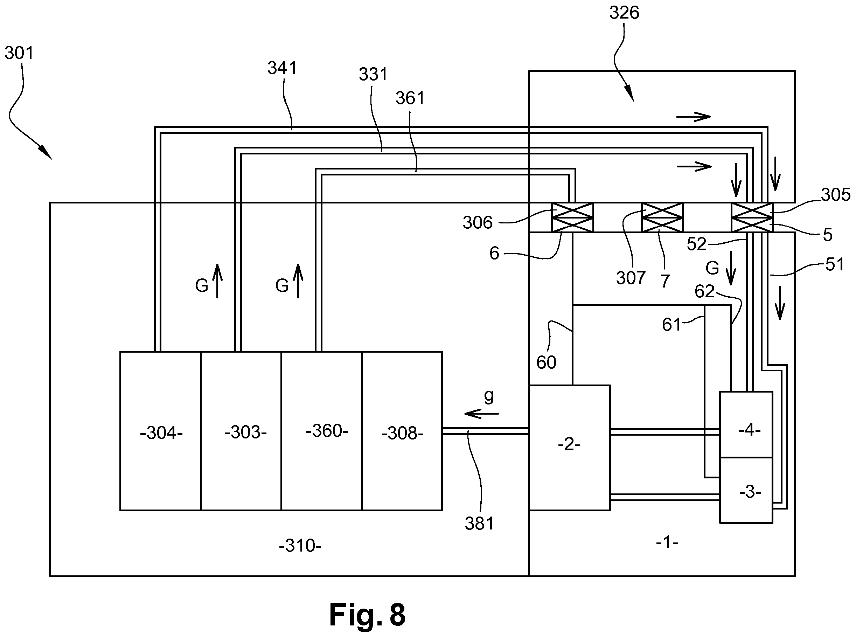

Comme montré en figure 8, plusieurs cuves, destinées à la réception de différents fluides, sont logées dans le bâti. On retrouve respectivement une cuve d'encre **303,** une cuve d'air comprimé **304,** ainsi qu'une cuve dite de purge **308,** destinée à la réception d'encre usagée. Cette cuve d'encre **303** et la cuve de purge **308** peuvent être absentes dans le cas où le module **1** utilise un réservoir d'encre qui est remplacé lorsqu'il est vide. Enfin la station **301** est équipée d'une unité centrale **360,** apte à commander notamment la mise en service des différentes interfaces de la station, lesquelles vont être décrites ci-dessous.

La station **301** est en outre équipée d'un ensemble de connexion mobile, désigné dans son ensemble par la référence **320.** Cet ensemble **320** comprend tout d'abord un chariot **321,** mobile par rapport au bâti **310** selon la direction YY. À cet effet, la paroi supérieure du bâti est munie par exemple de rails **322,** coopérant avec des glissières non représentées, ménagées dans le chariot. Le déplacement du chariot le long de ces rails est réalisé grâce à des moyens moteurs non représentés, de tout type approprié.

Le chariot **321** supporte une colonne **324,** fixe par rapport à ce chariot, placé en avant par rapport à ce dernier, à savoir qu'elle est tournée vers le volume de stockage du module. Cette colonne supporte son tour un bloc de connexion **326,** mobile par rapport à cette colonne selon la direction ZZ. À cet effet, on prévoit par exemple des vérins **328,** dont le corps est solidaire de la colonne et dont la tige est solidaire du bloc.

Le bloc de connexion **326** est équipé de plusieurs interfaces. On retrouve tout d'abord une interface fluidique **305,** conçue pour pouvoir à coopérer avec celle **5** du module **1.** Ces deux interfaces fluidiques, qui sont de type connu en soi, permettent une liaison détachable, à couplage rapide, entre le module **1** et la station **301.** Lorsque ces deux interfaces sont couplées, elle assure le passage de fluide entre ce module et cette station. En revanche, lorsque ces deux interfaces sont déconnectées, chacune d'elle assure une étanchéité pour un fluide respectif vis-à-vis de l'air ambiant.

L'interface **305** est reliée aux réservoirs **303** (si présent) et **304** par des canaux respectifs **331** et **341** (voir figure 8). Par ailleurs, il peut être prévu un canal de liaison supplémentaire **381,** reliant la tête d'impression **2** et le réservoir de purge **308.** Ce canal **381,** qui peut être raccordé de manière amovible sur cette tête d'impression, est associé à une source de dépression non représentée.

Le bloc de connexion **326** est en outre équipé de deux interfaces supplémentaires, respectivement électronique **306** et mécanique **307.** Ces interfaces **306** et **307** sont analogues à celles **106** et **107,** décrites ci-dessus, équipant le bras **111** du robot. L'interface électronique **306** est reliée, par l'intermédiaire d'une ligne de commande **361,** avec l'unité centrale **360** (voir figure 8).

Les figures 9 et 10 illustrent, à titre d'exemple, un mode de réalisation possible des différentes interfaces, équipant respectivement le module et la station.

Comme le montre la figure 9, l'interface fluidique **5** du module est formée par deux éléments de coupleurs **5'** et **5**" de type femelle, destinés respectivement à la circulation de gaz comprimé et d'encre. Par ailleurs, comme le montre la figure 10, l'interface fluidique **305** de la station est formée par deux éléments de coupleurs **305'** et **305"** de type mâle, destinés à coopérer avec les éléments de coupleurs **5'** et **5".**

De plus, comme le montre la figure 9, l'interface électronique **6** du module est formée par un élément de connecteur de type femelle. Par ailleurs, comme le montre la figure 10, l'interface électronique **306** de la station est formée par un élément de connecteur de type mâle, destiné à coopérer avec le connecteur femelle **6.**

Enfin, comme le montre la figure 9, l'interface mécanique **7** du module est formée par un élément de raccord rapide de type femelle. Par ailleurs, comme le montre la figure 10, l'interface mécanique **307** de la station est formée par un élément de connecteur de type mâle, destiné à coopérer avec le raccord rapide femelle **7.**

On notera que la structure des interfaces respectivement électronique **106** et mécanique **107,** équipant le robot, n'ont pas été décrites plus en détail. De manière typique, ces interfaces sont analogues à celles **306** et **307** équipant la station, telles que décrites en référence à la figure 9.

On va maintenant décrire, en référence aux figures 4 à 8, la mise en oeuvre de l'ensemble d'impression présenté ci-dessus.

On suppose tout d'abord, en référence à la figure 4, que les réservoirs **3** et **4** sont remplis respectivement moyens d'encre et d'air comprimé. On fait coopérer les deux couples d'interface, respectivement **6** et **106,** ainsi que **7** et **107.** Par conséquent, le robot et le module sont reliés de manière électronique, à savoir que l'unité centrale **161** est apte à commander les différents composants du module, via les lignes **160, 60, 61** et **62,** ce qui est matérialisé par les flèches **f.** Par ailleurs, ce robot et ce module sont mutuellement solidaires, sur un plan mécanique, grâce aux interfaces **7** et **107.**

Le robot commande alors la tête d'impression **2,** de manière à pulvériser l'encre sur la surface cible, comme cela est matérialisé par les flèches **p.** Au fur et à mesure de cette pulvérisation, de l'encre et de l'air supplémentaires sont admis dans la tête **2** à partir des réservoirs **3** et **4,** comme cela est matérialisé par les flèches **F.** Durant cette opération d'impression, la station **301** ne coopère pas avec le module **1.** En d'autres termes, comme le montre la figure 3, le volume de stockage V1 et inoccupé.

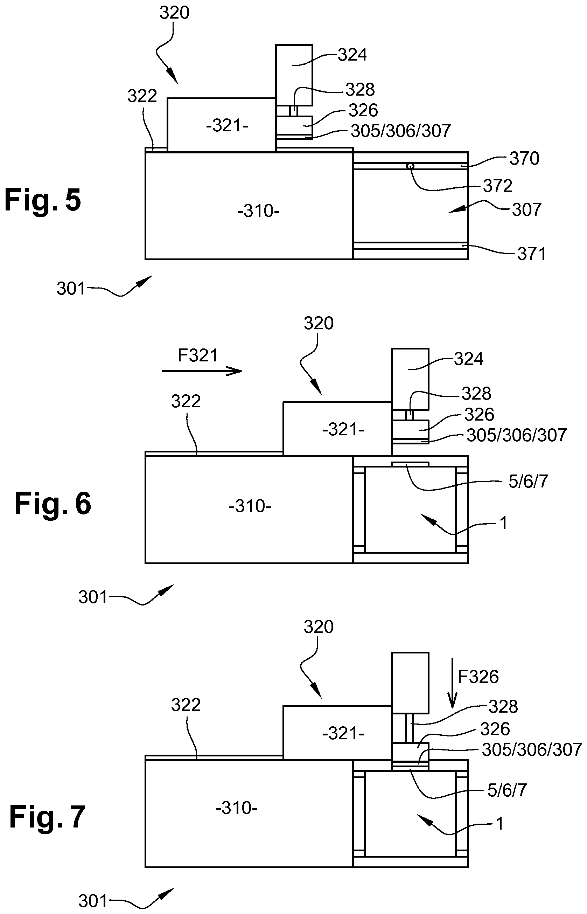

Au terme de cette opération d'impression, les réservoirs **3** et **4** sont désormais vides. Il convient désormais de procéder à leur rechargement, qui est illustré sur les figures 5 à 8. Le bras **111** dirige tout d'abord le module **1** vers le volume de stockage, de manière à accoster ce module sur la bride **309.** L'immobilisation du module, par rapport à cette bride, est réalisé grâce notamment au pion **372.** Puis, les interfaces **7** et **107** sont déconnectées, de sorte que le bras peut se retirer.

Lors de l'accostage du module sur la bride, comme visible sur la figure 5, l'ensemble mobile est dans une position dite inactive, à savoir que le bloc de connexion ne peut pas coopérer avec le module. On déplace alors cet ensemble mobile, selon deux étapes successives. Il s'agit tout d'abord de déplacer le chariot horizontalement, en direction de la zone de stockage, selon la flèche F321. Comme le montre la figure 6, le bloc de connexion **326** se trouve désormais à l'aplomb du module, tout en étant distant de ce dernier.

On déplace alors ce bloc verticalement vers le bas, selon la flèche F326, de manière à faire coopérer le bloc de connexion et le module. Dans cette position active de l'ensemble mobile montrée sur la figure 7, il y a coopération mutuelle entre les interfaces mécaniques **7** et **307,** entre les interfaces fluidique **5** et **305,** ainsi qu'entre les interfaces électroniques **6** et **306.**

Comme montré en figure 8, laquelle illustre uniquement la bâti **310,** le bloc **326** et le module **1,** l'unité centrale **360** commande alors le remplissage des réservoirs **3** et **4** à partir des cuves respectives **303** et **304,** ce qui est matérialisé par les flèches **G.** Par ailleurs, on raccorde la ligne de purge **381** avec la tête d'impression **2.** On injecte un solvant de nettoyage dans le volume intérieur de la tête, à partir d'un réservoir de solvant non représenté. L'encre usagée, initialement présente dans cette tête, est alors aspirée hors de cette tête afin d'être évacuée vers le réservoir **308** selon la flèche **g.** Cette opération de purge évite le colmatage de la tête d'impression 1 par de l'encre séchée pendant sa période d'inactivité.

Le module **1** est à nouveau opérationnel, en vue d'une opération supplémentaire d'impression, réalisée de manière analogue à ce qui a été décrit ci-dessus. On peut noter que, durant le rechargement du module **1,** le robot **101** peut appréhender un autre module afin de mettre en oeuvre une autre opération d'impression. Par conséquent, l'ensemble d'impression conforme à l'invention peut travailler en temps masqué.

De manière avantageuse les cuves **303,** appartenant aux différentes stations, sont remplies au moyen d'encres de types différents. Dans ce cas, chaque cuve est destinée à alimenter une tête d'impression dédiée, en vue de la projection d'une encre spécifique sur la surface cible. Au sens de l'invention des types différents d'encres peuvent signifier que les encres présentent des couleurs différentes et/ou des caractéristiques physico-chimiques différentes (telles que la viscosité ou la densité) et/ou des aspects différents (telles que la brillance).

Dans l'exemple décrit et représenté, chaque station est équipée d'une cuve de gaz comprimé. Cependant, à titre de variante, on peut prévoir une unique cuve de gaz comprimé, de plus grand volume, pour la totalité du magasin. Dans ce cas, cette cuve unique est reliée à l'interface fluidique de chaque station, par l'intermédiaire d'une conduite respective. On peut également prévoir que ni les stations ni le magasin ne comprend une cuve d'air, mais que l'alimentation en gaz comprimé provient d'une ligne externe reliée au magasin.

L'invention présente de nombreux avantages. Grâce à l'autonomie des modules d'impression **1** en encre (et possiblement en gaz comprimé) les mouvements du robot **101** selon l'invention ne sont pas entravés par la présence de tubes flexibles et câbles ; cela simplifie la conception, la programmation et l'utilisation du robot.

Le robot **101** selon l'invention peut être utilisé pour déposer par jet d'encre des encres et/ou vernis de protection sur la surface de pièces tridimensionnelles. Ces surfaces peuvent avoir une dimension décimétrique ou métrique ; ainsi leur plus grande dimension peut être comprise par exemple entre environ 2 dm et environ 2 m. Ces surface peuvent être galbées, et peuvent également comprendre une structure de surface, par exemple à l'échelle millimétrique.

A titre d'exemple, ce robot peut être utilisé pour décorer des pièces d'habillage pour l'habitacle d'une automobile. Ces pièces d'habillage peuvent être par exemple des tableaux de bord ou des pièces d'habillage de portes : leur plus grande dimension peut se situer typiquement entre 3 dm et 1,5 m. Ces pièces peuvent être fabriquée selon des procédés connus en tant que tels, par exemple en formant en revêtement en PVC à aspect de surface décoratif sur un support (âme) ; un tel procédé est décrit dans le document WO 98/00277 (Elf Atochem S.A.). Ces pièces peuvent présenter des fausses coutures, dont la surface présente typiquement des détails à une échelle d'environ 0,1 mm à 20 mm. Le robot selon l'invention permet de décorer ces détails par jet d'encre.

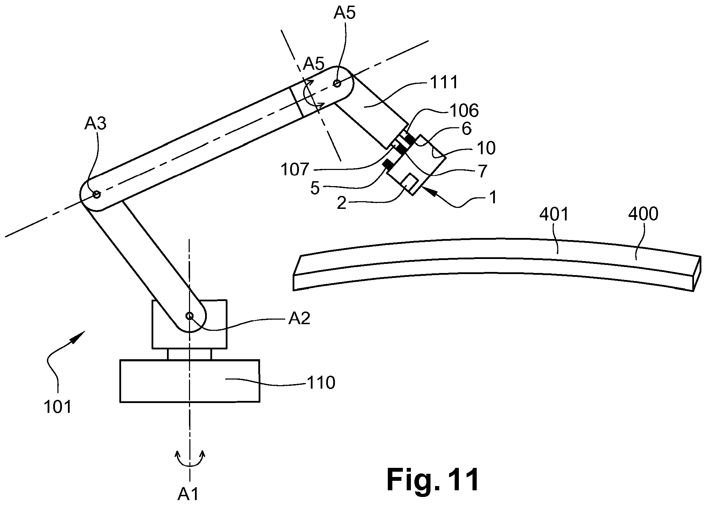

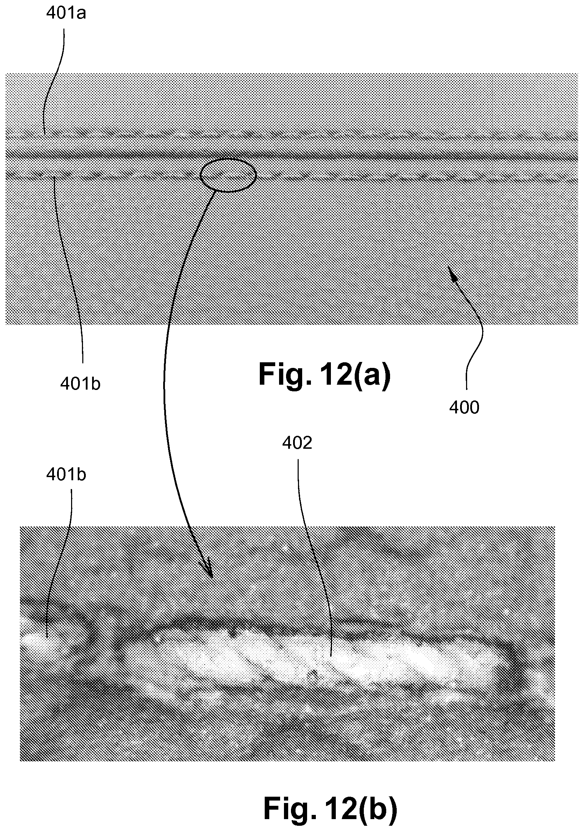

La figure 11 montre de manière schématique un ensemble d'impression à jet d'encre selon l'invention, comprenant le module à impression **1** à jet d'encre monté sur un robot à cinq axes **101** ; les axes sont repérés par les lettres **A1** à **A5.** Le module à impression est déplacé **1** au-dessus de la surface à décorer de la pièce à décorer **400** ; en l'occurrence cette surface est galbée, et le décor comprend une ligne **401** qui peut être droite ou non, et qui peut être continue ou non, et qui peut se situer sur une crête ou non de la surface galbée. Cette ligne peut être en relief, et/ou peut comporter des décors en relief, comme cela est montré sur la figure 12.

La figure 12 montre une photographie d'une partie de la surface d'une pièce à décorer **400,** en l'occurrence une pièce d'habillage pour habitacle d'automobile. Cette surface comprend un grainage en « cuir artificiel ». Elle comporte des coutures artificielles, disposées selon deux lignes **401a, 401b,** qui comprennent des éléments de décor en relief **402.** Le procédé selon l'invention permet en particulier de déposer de l'encre de couleur voulue sur ces éléments de décor en relief, à l'exclusion de la zone qui l'entoure ; autrement dit, l'encre ne recouvre que ces éléments de décor en relief. La précision de positionnement de l'encre sur ces éléments de décor en relief peut atteindre 0,10 mm, avec un diamètre de goutte d'encre de l'ordre de 80 µm.

L'encre peut être déposée en une ou en plusieurs passes. La décoration par le jet d'encre peut être complétée par le dépôt d'un vernis transparent, également par jet d'encre. Le magasin pour modules à impression de jet d'encre selon l'invention pouvant comporter une pluralité de modules à impression de jet d'encre comportant chacun une encre différente, il est facile de déposer, après la décoration par un jet d'encre de couleur voulue, un vernis transparent ; cela peut se faire en échangeant le module comportant l'encre par un autre module comportant le vernis. De même, il est facile d'utiliser une autre encre pour la pièce à décorer suivante. Ainsi, l'invention donne au fabricant de pièces décorées une très grande souplesse, qui répond à la demande de clients de personnaliser les objets.

## Revendications

1. Module (1) d'impression par jet d'encre, apte à être appréhendé par le bras (111) d'un robot (101) par l'intermédiaire d'une interface mécanique à couplage rapide, module comprenant :
- une tête d'impression (2),
- un réservoir d'encre (3), apte à alimenter en encre ladite tête d'impression (2),
- des moyens d'alimentation en gaz comprimé (4), aptes à alimenter en gaz comprimé ladite tête d'impression (2),
- une interface mécanique (7) apte à coopérer de manière amovible avec une interface mécanique complémentaire (107) d'un bras de robot,
- une interface électronique (6) apte à coopérer de manière amovible avec une interface électronique (106) dudit bras de robot, pour transférer des données entre ledit module et le robot,
- au moins une interface fluidique (5), mise en communication fluidique avec les moyens d'alimentation en gaz comprimé et/ou avec le réservoir d'encre.

2. Module (1) selon la revendication 1, **caractérisé en ce que** lesdits moyens d'alimentation en gaz comprimé comprennent un réservoir de gaz comprimé intégré audit module (1), et de préférence ledit réservoir d'encre (3) comprend ledit réservoir de gaz comprimé.

3. Module selon l'une quelconque des revendications 1 ou 2, **caractérisée en ce qu'**il comprend une ou deux conduites de liaison, s'étendant entre l'interface fluidique (5) et/ou respectivement le réservoir d'encre (3) et les moyens d'alimentation en gaz comprimé.

4. Robot (100) pour impression de jet d'encre, comprenant un bras (111) de robot, **caractérisé en ce que** ledit bras de robot comprend :
- une interface mécanique complémentaire (107) à couplage rapide apte à coopérer avec l'interface mécanique (7) à couplage rapide d'un module (1) à impression par jet d'encre selon l'une quelconque des revendications 1 à 3,
- une interface électronique complémentaire (106) apte à coopérer avec l'interface électronique (6) d'un module à impression par jet d'encre selon l'une quelconque des revendications 1 à 3,
ledit robot (100) étant de préférence un robot à cinq axes ou un robot à six axes.

5. Robot selon la revendication 4, **caractérisé en ce qu'**il comprend une unité centrale (161), ainsi qu'au moins une ligne de commande (161) reliant cette unité centrale et l'interface électronique complémentaire.

6. Magasin (201) pour modules à impression de jet d'encre, apte à accueillir une pluralité de modules (1) à impression de jet d'encre selon l'une quelconque des revendications 1 à 3, ledit magasin comprenant :
- une pluralité de stations d'accueil (301) pour un module d'impression à jet d'encre, chaque station d'accueil comprenant au moins une interface fluidique complémentaire (305) apte à coopérer avec l'interface fluidique (5) d'un module à impression par jet d'encre selon l'une quelconque des revendications 1 à 3, pour transférer de l'encre entre la tête et la station d'accueil et/ou pour alimenter la tête en gaz comprimé, ainsi que
- au moins une interface mécanique complémentaire (307) apte à coopérer avec l'interface mécanique (7) d'un module à impression par jet d'encre selon l'une quelconque des revendications 1 à 3, et de préférence
- au moins une alimentation en gaz comprimé, qui peut être une cuve à gaz comprimé (304) ; et/ou au moins une cuve à encre (303).

7. Magasin selon la revendication 6, **caractérisé en ce que** chaque station comprend un bâti (310) contenant ladite au moins une cuve à encre et/ou ladite au moins une cuve à gaz comprimé.

8. Magasin selon l'une des revendications 6 ou 7, **caractérisé en ce qu'**il comprend un ensemble mobile (320) équipé de ladite interface mécanique complémentaire, et le cas échéant de ladite interface fluidique complémentaire et/ou de ladite interface électronique complémentaire,
et ledit ensemble mobile comprenant de préférence d'un chariot (321) apte à être déplacé par rapport au bâti (310) selon une première direction, notamment horizontale, ainsi qu'un bloc de connexion (326) apte à être déplacé par rapport au chariot selon une seconde direction, notamment verticale, ledit bloc de connexion étant équipé de ladite interface mécanique complémentaire, et, le cas échéant, de ladite interface fluidique complémentaire et/ou de ladite interface électronique complémentaire.

9. Magasin selon la revendication 8, **caractérisé en ce que** chaque station comprend en outre une bride d'immobilisation (307), s'étendant à partir du bâti (310), ladite bride et le bâti définissant un volume (V1) de réception d'un module, ladite bride et/ou le bâti étant munis de moyens d'immobilisation dudit module (1).

10. Ensemble d'impression par jet d'encre, comprenant un robot selon l'une quelconque des revendications 4 ou 5, un magasin selon l'une quelconque des revendications 6 à 9, ainsi qu'au moins un module selon l'une quelconque des revendications 1 à 3, ladite interface mécanique et ladite interface mécanique complémentaire définissant de préférence un couplage rapide amovible, en particulier de type quart de tour.

11. Procédé d'impression à jet d'encre, comprenant les étapes suivantes :
(i) appréhension d'un module d'impression par jet d'encre selon l'une quelconque des revendications 1 à 3 se trouvant dans une station d'accueil d'un magasin pouvant contenir plusieurs desdits modules, ladite appréhension se faisant par coopération entre ladite interface mécanique complémentaire du robot et ladite interface mécanique dudit module,
(ii) connexion de l'interface électronique complémentaire dudit robot avec l'interface électronique dudit module,
(iii) déplacement du bras de robot vers une surface à imprimer,
(iv) impression d'encre sur ladite surface en déplaçant le bras de robot, en une ou plusieurs passes, ledit module étant commandé par des données qui lui sont envoyées à travers ladite interface électronique et ladite interface électronique complémentaire,
(v) à la fin de cette séquence d'impression, déplacement du bras de robot vers une station d'accueil,
(vi) dépose de la tête d'impression dans ladite station d'accueil, en déconnectant lesdites interfaces électronique et mécanique,
ledit procédé comprenant de préférence en plus le rechargement dudit réservoir d'encre du module au moyen d'encre, par connexion de l'interface fluidique dudit module et de l'interface fluidique complémentaire de ladite station.

12. Procédé selon la revendication 11, comprenant en plus les étapes suivantes :
(vii) déplacement du bras de robot vers une autre station d'accueil,
(viii) exécution des étapes (i) à (vi) avec une autre tête à impression de jet d'encre se trouvant dans cette station d'accueil.

13. Procédé selon la revendication 11 ou 12, **caractérisé en ce que** ledit robot est un robot selon l'une quelconques des revendications 4 ou 5, et/ou **en ce que** ledit magasin est un magasin selon l'une quelconque des revendications 6 à 9.

14. Procédé selon l'une quelconque des revendications 11 à 13, dans lequel on réalise l'étape (iv) d'impression d'encre au moyen d'un premier module, pendant qu'on réalise le rechargement d'au moins un autre module.

15. Utilisation d'un procédé selon l'une quelconque des revendications 11 à 14 pour imprimer sur des surfaces galbées selon au moins une direction principale, ladite surface galbée étant de préférence une surface visible d'une pièce d'habillage d'un habitacle d'automobile.

## Patentansprüche

1. Tintenstrahldruckmodul (1), das über eine mechanische Schnellkupplungsschnittstelle vom Arm (111) eines Roboters (101) aufgenommen werden kann, wobei das Modul Folgendes umfasst:
- einen Druckkopf (2);
- ein Tintenreservoir (3), das den Druckkopf (2) mit Tinte versorgen kann;
- Druckgasversorgungsmittel (4), die in der Lage sind, dem Druckkopf (2) Druckgas zuzuführen;
- eine mechanische Schnittstelle (7), die lösbar mit einer komplementären mechanischen Schnittstelle (107) eines Roboterarms in Eingriff kommen kann;
- eine elektronische Schnittstelle (6), die lösbar mit einer elektronischen Schnittstelle (106) des Roboterarms in Eingriff kommen kann, um Daten zwischen dem Modul und dem Roboter zu übertragen; und
- mindestens eine Fluidschnittstelle (5), die in Fluidverbindung mit der Druckgasversorgungseinrichtung und/oder mit dem Tintenreservoir steht.

2. Modul (1) nach Anspruch 1, **dadurch gekennzeichnet, dass** die Druckgasversorgungseinrichtung ein in das Modul (1) integriertes Druckgasreservoir umfasst und dass vorzugsweise das Tintenreservoir (3) das Druckgasreservoir umfasst.

3. Modul nach einem der Ansprüche 1 oder 2, **dadurch gekennzeichnet, dass** es ein oder zwei Verbindungsrohre umfasst, die zwischen der Fluidschnittstelle (5) und/oder bzw. dem Tintenreservoir (3) und der Druckgasversorgungseinrichtung verlaufen.

4. Roboter (100) für den Tintenstrahldruck, der einen Roboterarms (111) umfasst, **dadurch gekennzeichnet, dass** der Roboterarm Folgendes umfasst:
- eine komplementäre mechanische Schnellkupplungsschnittstelle (107), die mit der mechanischen Schnellkupplungsschnittstelle (7) eines Tintenstrahldruckmoduls (1) nach einem der Ansprüche 1 bis 3 in Eingriff kommen kann;
- eine komplementäre elektronische Schnittstelle (106), die mit der elektronischen Schnittstelle (6) eines Tintenstrahldruckmoduls nach einem der Ansprüche 1 bis 3 in Eingriff treten kann,
wobei es sich bei dem Roboter vorzugsweise um einen Fünf-Achsen-Roboter oder einen Sechs-Achsen-Roboter handelt.

5. Roboter nach Anspruch 4, **dadurch gekennzeichnet, dass** er eine Zentraleinheit (161) sowie mindestens eine Steuerleitung (161) umfasst, die diese Zentraleinheit und die komplementäre elektronische Schnittstelle verbindet.

6. Magazin (201) für Tintenstrahldruckmodule, wobei das Magazin mehrere Tintenstrahldruckmodule (1) nach einem der Ansprüche 1 bis 3 daran andockend aufnehmen kann, wobei das Magazin umfasst:
- eine Vielzahl von Dockingstationen (301) für ein Tintenstrahldruckmodul, wobei jede Dockingstation mindestens eine komplementäre Fluidschnittstelle (305) umfasst, die in der Lage ist, mit der Fluidschnittstelle (5) eines Tintenstrahldruckmoduls nach einem der Ansprüche 1 bis 3 in Eingriff zu kommen, um Tinte zwischen dem Druckkopf und der Dockingstation zu übertragen und/oder dem Druckkopf Druckgas zuzuführen; sowie
- mindestens eine komplementäre mechanische Schnittstelle (307), die mit der mechanischen Schnittstelle (7) eines Tintenstrahldruckmoduls nach einem der Ansprüche 1 bis 3 in Eingriff treten kann, und vorzugsweise
- mindestens eine Druckgasversorgung, bei der es sich um einen Gastank (304) handeln kann; und/oder mindestens einen Tintentank (303).

7. Magazin nach Anspruch 6, **dadurch gekennzeichnet, dass** jede Station einen Rahmen (310) umfasst, der den mindestens einen Tintentank und/oder den mindestens einen Druckgastank enthält.

8. Magazin nach einem der Ansprüche 6 oder 7, **dadurch gekennzeichnet, dass** es eine bewegliche Baugruppe (320) umfasst, die mit der komplementären mechanischen Schnittstelle und gegebenenfalls mit der komplementären Fluidschnittstelle und/oder mit der komplementären elektronischen Schnittstelle ausgestattet ist,
wobei die bewegliche Baugruppe vorzugsweise einen Schlitten (321) umfasst, der relativ zum Rahmen (310) in einer ersten Richtung, insbesondere einer horizontalen Richtung, bewegt werden kann, sowie einen Verbindungsblock (326), der relativ zum Schlitten in einer zweiten Richtung, insbesondere einer vertikalen Richtung, bewegt werden kann, wobei der Verbindungsblock mit der komplementären mechanischen Schnittstelle und gegebenenfalls mit der komplementären Fluidschnittstelle und/oder mit der komplementären elektronischen Schnittstelle ausgestattet ist.

9. Magazin nach Anspruch 8, **dadurch gekennzeichnet, dass** jede Station außerdem einen Immobilisierungsflansch (307) umfasst, der sich vom Rahmen (310) erstreckt, wobei der Flansch und der Rahmen ein Volumen (V1) zur Aufnahme eines Moduls definieren, wobei der Flansch und/oder der Rahmen mit Mitteln zur Immobilisierung des Moduls (1) ausgestattet ist.

10. Tintenstrahldruckanordnung, umfassend einen Roboter nach einem der Ansprüche 4 bis 5, ein Magazin nach einem der Ansprüche 6 bis 9 sowie mindestens ein Modul nach einem der Ansprüche 1 bis 3, wobei die besagte mechanische Schnittstelle und die besagte komplementäre mechanische Schnittstelle vorzugsweise eine abnehmbare Schnellkupplung, insbesondere vom Typ Vierteldrehung, darstellen.

11. Tintenstrahldruckverfahren, einschließlich der folgenden Schritte:
(i) Aufnehmen eines Tintenstrahldruckmoduls nach einem der Ansprüche 1 bis 3, das sich in einer Dockingstation eines Magazins befindet, das eine Vielzahl dieser Module enthalten kann, wobei das Aufnehmen mittels Eingriff zwischen der komplementären mechanischen Schnittstelle des Roboters und der besagten mechanischen Schnittstelle des besagten Moduls erfolgt;
(ii) Verbinden der komplementären elektronischen Schnittstelle des Roboters mit der elektronischen Schnittstelle des Moduls;
(iii) Bewegen des Roboterarms zu einer zu bedruckenden Oberfläche;
(iv) Drucken von Tinte auf die Oberfläche durch Bewegen des Roboterarms in einem oder mehreren Durchgängen, wobei das Modul durch Daten gesteuert wird, die ihm über die elektronische Schnittstelle und die komplementäre elektronische Schnittstelle gesendet werden;
(v) am Ende dieser Drucksequenz Bewegen des Roboterarms zu einer Dockingstation; Und
(vi) Ablegen des Druckkopfes in der Dockingstation, unter Trennen der elektronischen und mechanischen Schnittstellen,
wobei das Verfahren vorzugsweise weiterhin das Nachfüllen des Tintenreservoirs mit Tinte umfasst, indem die Fluidschnittstelle des Moduls mit der komplementären Fluidschnittstelle der Dockingstation verbunden wird.

12. Verfahren nach Anspruch 11, weiterhin umfassend die folgenden Schritte:
(vii) Bewegen des Roboterarms zu einer anderen Dockingstation; und
(viii) Durchführen der Schritte (i) bis (vi) unter Verwendung eines anderen Tintenstrahldruckkopfs, der sich in dieser Dockingstation befindet.

13. Verfahren nach Anspruch 11 oder 12, **dadurch gekennzeichnet, dass** der Roboter ein Roboter nach einem der Ansprüche 4 bis 5 ist und/oder dass das Magazin ein Magazin nach einem der Ansprüche 6 bis 9 ist.

14. Verfahren nach einem der Ansprüche 11 bis 13, wobei der Tintendruckschritt (iv) unter Verwendung eines ersten Moduls durchgeführt wird, während mindestens ein anderes Modul nachgefüllt wird.

15. Verwendung eines Verfahrens nach einem der Ansprüche 11 bis 14 zum Bedrucken von Oberflächen, die in mindestens einer Hauptrichtung gekrümmt sind, wobei die gekrümmte Oberfläche vorzugsweise eine sichtbare Oberfläche eines Verkleidungsteils eines Automobil-Fahrgastraums ist.

## Claims

1. Inkjet printing module (1) capable of being picked up by the arm (111) of a robot (101) via a quick-coupling mechanical interface, said module including:
- a print head (2);
- an ink reservoir (3) capable of supplying ink to said print head (2);
- compressed-gas supply means (4) capable of supplying compressed gas to said print head (2);
- a mechanical interface (7) capable of engaging removably with a complementary mechanical interface (107) of a robot arm;
- an electronic interface (6) capable of engaging removably with an electronic interface (106) of said robot arm in order to transfer data between said module and the robot; and
- at least one fluid interface (5) placed in fluid communication with the compressed-gas supply means and/or with the ink reservoir.

2. Module (1) according to claim 1, **characterized in that** said compressed-gas supply means include a compressed-gas reservoir integrated into said module (1), and **in that** preferably said ink reservoir (3) includes said compressed-gas reservoir.

3. Module according to any of claims 1 or 2, **characterized in that** it includes one or two connecting pipes extending between the fluid interface (5) and/or, respectively, the ink reservoir (3) and the compressed-gas supply means.

4. Robot (100) for inkjet printing, including a robot arm (111), **characterized in that** said robot arm includes:
- a quick-coupling complementary mechanical interface (107) capable of engaging with the quick-coupling mechanical interface (7) of an inkjet printing module (1) according to any of claims 1 to 3; and
- a complementary electronic interface (106) capable of engaging with the electronic interface (6) of an inkjet printing module according to any of claims 1 to 3,
the robot being preferably a five-axis robot or a six-axis robot.

5. Robot according to claim 4, **characterized in that** it includes a central processing unit (161), as well as at least one control line (161) connecting this central processing unit and the complementary electronic interface.

6. Magazine (201) for inkjet printing modules, the magazine being capable of accommodating, docked thereon, a plurality of inkjet printing modules (1) according to any of claims 1 to 3, said magazine including:
- a plurality of docking stations (301) for an inkjet printing module, each docking station including at least one complementary fluid interface (305) capable of engaging with the fluid interface (5) of an ink jet printing module according to any of claims 1 to 3 in order to transfer ink between the head and the docking station and/or to supply compressed gas to the head; as well as
- at least one complementary mechanical interface (307) capable of engaging with the mechanical interface (7) of an inkjet printing module according to any of claims 1 to 3, and preferably at least one compressed-gas supply, which may be a compressed-gas tank (304), and/or at least one ink tank (303).

7. Magazine according to claim 6, **characterized in that** each station includes a frame (310) containing said at least one ink tank and/or said at least one compressed-gas tank.

8. Magazine according to any of claims 6 or 7, **characterized in that** it includes a movable assembly (320) provided with said complementary mechanical interface, and, where appropriate, with said complementary fluid interface and/or with said complementary electronic interface,
and said movable assembly includes preferably a carriage (321) capable of being moved relative to the frame (310) in a first direction, in particular a horizontal direction, as well as a connection block (326) capable of being moved relative to the carriage in a second direction, in particular a vertical direction, said connection block being provided with said complementary mechanical interface, and, where appropriate, with said complementary fluid interface and/or with said complementary electronic interface.

9. Magazine according to claim 8, **characterized in that** each station further includes an immobilization flange (307) extending from the frame (310), said flange and the frame defining a volume (V1) for receiving a module, said flange and/or the frame being provided with means for immobilizing said module (1).

10. Inkjet printing assembly, including a robot according to any of claims 4 to 5, a magazine according to any of claims 6 to 9, as well as at least one module according to any of claims 1 to 3, said mechanical interface and said complementary mechanical interface preferably defining a removable quick coupling, in particular of the quarter-turn type.

11. Inkjet printing method, including the following steps:
(i) picking up an inkjet printing module according to any of claims 1 to 3 which is located in a docking station of a magazine that can contain a plurality of said modules, said picking up being carried out by means of engagement between said complementary mechanical interface of the robot and said mechanical interface of said module;
(ii) connecting the complementary electronic interface of said robot with the electronic interface of said module;
(iii) moving the robot arm to a print surface;
(iv) printing ink on said surface by moving the robot arm, in one or more passes, said module being controlled by data sent thereto by way of said electronic interface and said complementary electronic interface;
(v) at the end of this printing sequence, moving the robot arm to a docking station; and
(vi) depositing the print head in said docking station, disconnecting said electronic and mechanical interfaces,
said method preferably further comprising the refilling of said ink reservoir with ink, by connecting the fluidic ingterface of said module with the complementary fluidic interface of said docking station.

12. Method according to either claim 11, further including the following steps:
(vii) moving the robot arm to another docking station; and
(viii) performing steps (i) to (vi) using another inkjet print head located in this docking station.

13. Method according to either claim 11 or claim 12, **characterized in that** said robot is a robot according to any of claims 4 to 5, and/or **in that** said magazine is a magazine according to any of claims 6 to 9.

14. Method according to any of claims 11 to 13, wherein the ink printing step (iv) is carried out using a first module while at least one other module is being refilled.

15. Use of a method according to any of claims 11 to 14 for printing on surfaces that are curved in at least one main direction, said curved surface being preferably a visible surface of a cladding part of an automobile passenger compartment.
